(19) Europäisches Patentamt
European Patent Office
Office européen des brevets

(11) **EP 3 961 570 A1**

(12) **EUROPEAN PATENT APPLICATION**

(43) Date of publication:
**02.03.2022 Bulletin 2022/09**

(21) Application number: **20193035.1**

(22) Date of filing: **27.08.2020**

(51) International Patent Classification (IPC):
**G06T 11/00** $^{(2006.01)}$

(52) Cooperative Patent Classification (CPC):
**G06T 11/008**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
- **GRAHE, Jan Gerrit**
  **5656 AE Eindhoven (NL)**
- **SALOMON, Andre Frank**
  **5656 AE Eindhoven (NL)**

(74) Representative: **Philips Intellectual Property & Standards**
**High Tech Campus 52**
**5656 AG Eindhoven (NL)**

(54) **AI-BASED VIRTUAL FOV EXTENSION FOR SCATTER CORRECTION IN EMISSION TOMOGRAPHY**

(57) A system (IPS) and related method for image processing. The system comprises an input interface (IN) for receiving a first input emission image ($I_E$) of a patient. The first input emission image ($I_E$) is obtained by an emission imaging apparatus (IA1) for a first axial field of view (E-FOV) along a longitudinal axis of the first imaging apparatus (IA1). A trained machine learning model (M,M1) estimates, based on the input image, a first extension ($I_{X,E}$) of the first emission image for a second axial field of view (OF) along the longitudinal axis outside the first axial field of view. The extension image allows for improved scattering correction.

**FIG. 1**

Printed by Jouve, 75001 PARIS (FR)

**(Cont. next page)**

**FIG. 2**

**Description**

FIELD OF THE INVENTION

The invention relates to a system of image processing, to a training system for training a machine learning model for use in image processing, to a method of image processing, to a method of training a machine learning model for use in image processing, to a method of obtaining training data for training a machine learning model, to an imaging arrangement, to a computer program element, and to a computer readable medium.

BACKGROUND OF THE INVENTION

Emission imaging (also known as nuclear imaging) includes PET (positron emission tomography) and SPECT (Single photon emission computed tomography) imaging. These imaging modalities allow imaging mainly for function (eg, metabolic activity) rather than structure as in (X-ray) transmission imaging, such as CT (Computed Tomography) or radiography.

Emission imaging is based on the measurement of gamma particles. The gamma particles are caused by radioactivity of a tracer agent previously administered to the patient. The gamma particles are detected when they deposit a specific energy in a PET detector. The specific energy is specified in the scanner's energy window. This procedure reduces the amount of scattered particles, which already deposited energy in patient tissue, due to inelastic (Compton) scattering and therefore lost their directional information.

However, due to the continuous energy loss function in Compton scattering as well as the intrinsic limitation on the detector's energy resolution, one cannot entirely prevent measuring scattered coincidences. The remaining scattered particles have a negative impact on image quality (IQ). This necessitates scattering correction of reconstructed emission imagery.

Some scattering correction approaches are based on scatting simulations, which model the effects of single or even multiple scattering events. The simulations may be based on i) a first reconstructed PET image ("activity image") that represents a current estimate of the tracer activity distribution, and ii) on an attenuation image. The attenuation image may be based on a reconstructed CT image. The activity image is useful for the scattering simulation as it describes the origin of the gamma particles, while the attenuation image gives the probability that the particle is being scattered. Given the simulation, the current reconstructed PET image can be correct for scattered coincidences. Image artifacts and/or SUV (standard uptake value)-bias due to scattering can be reduced or eliminated to obtain a final PET image for example.

However, scattering events outside a current axial field of view (FOV) may also negatively impact IQ.

SUMMARY OF THE INVENTION

There may therefore be a need for improvements in particular in emission imaging.

An object of the present invention is achieved by the subject matter of the independent claims where further embodiments are incorporated in the dependent claims. It should be noted that the following described aspect of the invention equally applies to the training system for training a machine learning model for use in image processing, to the method of image processing, to the method of training a machine learning model for use in image processing, to the method of obtaining training data for training a machine learning model, to the imaging arrangement, to the computer program element and to the computer readable medium.

According to a first aspect of the invention there is provided a system for image processing, comprising:

- an input interface for receiving a first input emission image of a patient, obtained by an emission imaging apparatus for a first axial field of view along a longitudinal axis of the first imaging apparatus; and
- a trained machine learning model configured to estimate, based on at least the input image, a first extension of the first emission image for a second axial field of view along the longitudinal axis at least partly outside the first axial field of view.

The extension (image) allows for more accurate scattering correction for scatter events that are outside the (orginal) first axial field of view. The extension may be one sided or two-sided.

In embodiments, the trained machine learning model, or a different machine learning model, is to estimate a second extension of a second input non-emission image for a third axial field of along the, or a, longitudinal axis of a second non-emission imaging apparatus, based on the at least the second input non-emission image obtained by the second imaging apparatus for a fourth axial field of view of the, or a different, longitudinal axis of the second imaging apparatus, the third axial field of view at least partly outside the fourth axial field of view. The axes may be different if the imaging arrangement is not of the tandem type.

In embodiments, the system comprises a scatter corrector configured to scatter correct the first input emission image based at least on the first and/or second image extension.

In embodiments, the trained machine learning model is configured to estimate the first extension further based on one or more of i) the, or a, second input non-emission image, and ii) contextual data in relation to the patient. Processing by the machine learning model as input both images (the emission image and non-emission image), optionally complemented by the contextual data, allows for a more robust estimate of the emission image extension. Any such non-emission image may be used. Preferably the additional input, the non-emission image, is of the same patient as may be obtained in a tandem imaging arrangement, or obtained previously in different imaging session. Alternatively, a non-emission image of a different patient is used, preferably having some bio-characteristics in common with the current patient.

In embodiments, the second imaging apparatus is any one of a computed tomography imaging apparatus and a magnetic resonance imaging apparatus. Other non-emission modalities are not excluded herein, such as ultrasound, photo-acoustic or other still.

In embodiments, the machine learning model is of the artificial neural network type.

In embodiments, the artificial neural network model is of the recurrent type. The recurrent type is useful for processing sequential data such the emission image and some non-emission imagery that are volumes of image slices along the imaging axis.

In embodiments, the artificial neural network model is of the convolutional type.

In another aspect there is provided a training system for training, based on training data, a machine learning model for a task of estimating, based on at least one input image for a first axial field of view an extension image for a second axial field of view at least partly outside the first axial field of view.

In embodiments, the training system includes two machine learning models, a generator and a discriminator, wherein the generator generates training output data, and the other model, the discriminator, classifies the said training output data to produce a classification result, and wherein a parameter adjuster of the training system is to adjust, based on the training output data and the classification result, parameter(s) of at least the generator The discriminator attempts or classify into two classes, eg, "genuine" and "fake", in an attempt to distinguish between imagery drawn from the training data set ("genuine"), and imagery computed by the generator ("fake"). The training may be used to extend either the emission image or the transmission image, or both.

In another aspect there is provided a method for image processing, comprising:

- receiving a first input emission image of a patient, obtained by an emission imaging apparatus for a first axial field of view along a longitudinal axis of the first imaging apparatus; and
- by a trained machine learning model, estimating, based on the input image, a first extension of the first emission image for a second axial field of view along the longitudinal axis at least partly outside the first axial field of view.

In embodiments, the method may further comprise scatter-correcting the first input emission image based at least on the first and/or second image extension.

In embodiments, the estimating is based on further input including on one or more of i) the, or a, second input non-emission image, and ii) contextual data in relation to the patient.

In another aspect there is provided a method of training a machine learning model as used in any one of the previous claims. Any training method, supervised, unsupervised, semi-supervised, semi-unsupervised may be used.

In another aspect there is provided a method of obtaining training data for training a machine learning model for a task of estimating, based on at least one input image for a first axial field of view, an extension image for a second axial field of view at least partly outside the first field of view, comprising:

- in historical image data, identifying image portions for different axial FOVs, and
- associating respective one or more portions of said portions to obtain different training data items. The different axial FOV may be portions of one larger FOV, such as can be found in historical whole-body or total body scans, or other scans that cover broad enough a section of the patient to include a region of interest for which the machine learning model is to be trained. Alternatively, the different FOV form different discrete FOVs (overlapping or not) from different imaging sessions in relation to the same or a similar patient.

For accurate scattering simulation, and hence accurate scattering correction, a preliminary reconstructed emission image (such as PET), referred to as an "activity image" as well as an attenuation image may be required. Information from both images allow calculating the estimated amount of scattering for each detector pair/line-of-response (LOR).

If such information is not available, one may not be able to run realistic scattering simulations, leading to an unknown scattering behavior and artefacts in the image. This lack of information is prevalent at axial borders of the PET field of view (FOV) as scattering from outside of the FOV can have an impact on the region inside the FOV. Interfering tracer activity outside of the FOV is a reality for most PET scans, as it is usually not the case that the whole body is scanned. Even so called "whole-body" (WB) scans usually cover only an area between head and hips.

Instead of, for example, simply extrapolating the activity distribution from the last slices of the PET image at the border portions of the FOV, the proposed method and system uses machine learning ("ML") to robustly estimate the out-field of view emission image, an extension image, for the current FOV. This avoids over- or underestimating scattering from outside of the axial FOV when relying on simple extrapolation. The proposed approach facilitates improved scatting simulation and/or correction by ML-modelling the most probable extension of the activity/attenuation distribution outside of the (axial) FOV, based on preferably both, the anatomy (as furnished by the transmission image) and the activity inside of the current FOV as furnished by the current emission image.

The proposed method and system helps improve image quality in axial outer regions of the PET scanner' FOV and reduce a possible SUV bias.

By harnessing information as recorded in historical emission imagery as held in image databases, ML-training data can be obtained in a simple and cheap manner. Large training data sets can be constructed which translate into high performance machine learning models, thanks to good training based on this large training data set. Historical WB scans are particularly useful herein (but not a necessity), and even more so total body (TB) scans, where the whole body from head to toe was scanned.

In another aspect there is provided a computer program element, which, when being executed by at least one processing unit, is adapted to cause the processing unit to perform the method as per any one of the above mentioned embodiments.

In another aspect still, there is provided a computer readable medium having stored thereon the program element.

Definitions

*"user"* relates to a person, such as medical personnel or other, operating the imaging apparatus or overseeing the imaging procedure. In other words, the user is in general not the patient.

*"patient"* is used herein in the general sense to includes animals. The patient may be imaged in whole or in parts, such as for a region of interests, an anatomy or organ, or group of anatomies or organs, etc.

In general, the *"machine learning"* includes a computerized arrangement that implements a machine learning ("ML") algorithm. Some such Ml algorithms are based on adapting a machine learning model that is to perform a task. This adaption is called "training". Performance of task by the ML model improves measurably, the more (new) training data is used to train the model. The performance may be measured by objective tests when feeding the system with test data. The performance may be defined in terms of a certain error rate to be achieved for the given test data. See for example, T. M. Mitchell, "Machine Learning", page 2, section 1.1, McGraw-Hill, 1997.

BRIEF DESCRIPTION OF THE DRAWINGS

Exemplary embodiments of the invention will now be described with reference to the following drawings, which are not to scale, wherein:

Fig. 1 shows a schematic block diagram of a multi-modal imaging arrangement;
Fig. 2 shows, in plan view, axial fields of view for two imaging modalities;
Fig. 3 shows further examples of axial field of views;
Fig. 4 shows a flow chart of a method of processing image data;
Fig. 5A, B show artificial neural network-type machine learning models;
Fig. 6 shows a training system for training a machine learning model;
Fig. 7 shows a generative adversarial framework for training an artificial neural network-type machine learning model;
Fig. 8 shows a flow chart for a computer-implemented method of obtaining training data for training a machine learning model;
Fig. 9 shows a computer-implemented method of training a machine learning model; and
Fig. 10 is an illustration of a method of obtaining training data for training a machine learning model.

DETAILED DESCRIPTION OF EMBODIMENTS

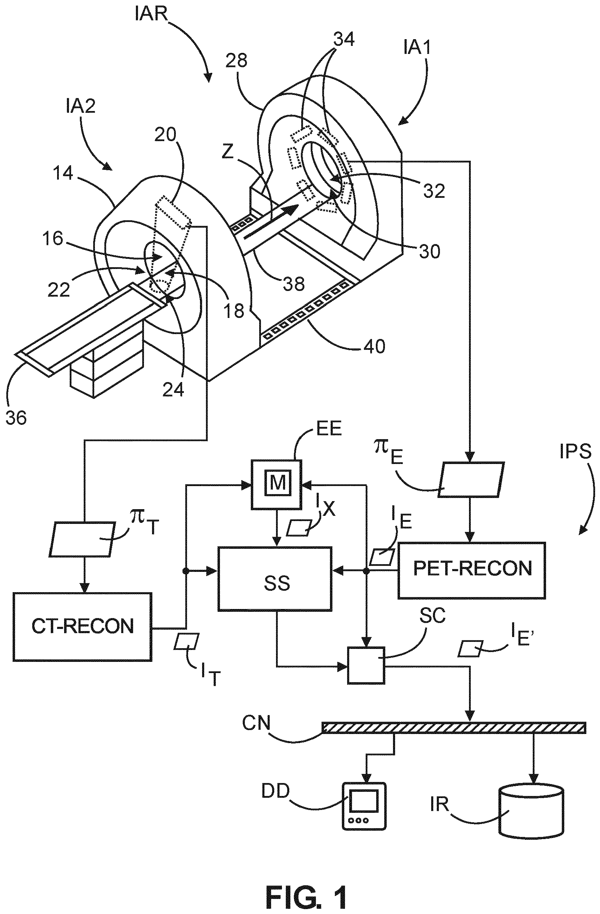

With reference to Fig. 1, a medical imaging arrangement IAR may be capable of transmission imaging, such as X-ray computer tomography (CT), and emission imaging, such as PET or SPECT.

The preferably diagnostic imaging arrangement IAR may include a first transmission imaging system IA2, in the illustrated embodiment a CT scanner , housed within a first gantry 14. A bore 16 defines a first examination region 18 of the CT scanner IA2. An array of radiation detectors 20 is disposed on a rotating gantry 22 configured to receive transmission X-radiation from an X-ray source 24 disposed opposite the detectors 20 on the rotating gantry 22. It should be appreciated that other imaging modalities are also contemplated.

A second imaging system IA1, in the illustrated embodiment a PET scanner, is housed within a second gantry 28 which defines a patient receiving bore 30. It should be appreciated that SPECT or other imaging modalities such as MRI are also contemplated. A stationary ring of radiation detectors 34 are arranged around the bore 30 to define a second (PET)-examination region 32.

The two gantries 14, 28 are adjacent to one another and share a common patient support 36 that translates along a, preferably common, longitudinal imaging axis Z between the two examination regions 18, 32 along a patient support track or path 38. A motor or other drive mechanism (not shown) provides the longitudinal movement and optionally vertical adjustments of the support in the examination regions 18, 32. In the illustrated embodiment, the PET gantry 28 translates along a gantry track 40 to reduce the transit time between imaging systems IA1, IA2. A closed arrangement between gantries reduces the likelihood of patient movement and mis-registration errors stemming from increased scan times. Mounting the CT and PET systems in a single, shared gantry with a common examination region is also contemplated. The risk of mis-registration is thus reduced, if not eliminated.

With continuing reference to Fig. 1, the patient support 36 positions the patient or subject to be imaged into the first examination region 18 for a CT scan to be generated by the CT scanner IA2. The X-ray source is operated to irradiate the patient's ROI. Radiation is detected at the X-ray detector. The detected radiation is converted into transmission projection raw data. The acquired transmission projection data may be stored in a data buffer (not shown).

The patient support moves the subject to the PET examination region 32. The patient support aligns the subject's ROI (region of interest) with the PET FOV, based for example on a CT surview scan. Emission radiation egresses the patient's body. The PET detector detects emission radiation to acquire PET projection raw data. The PET projection data may be stored in a data buffer (not shown). The emission stems from radiative tracer agent ("tracer") previously administered. The tracer accumulates in patient's body, in particular, but not only, the ROI.

The order in which the emission and transmission imaging occurs is immaterial and may happen concurrently in systems with shared gantry and examination region. Whilst an arrangement as shown in Fig. with a common imaging axis Z is preferred, this is not a requirement herein as non-tandem systems are also envisaged where transmission and emission imagers are physically and functionally separated such as in different exam rooms for example.

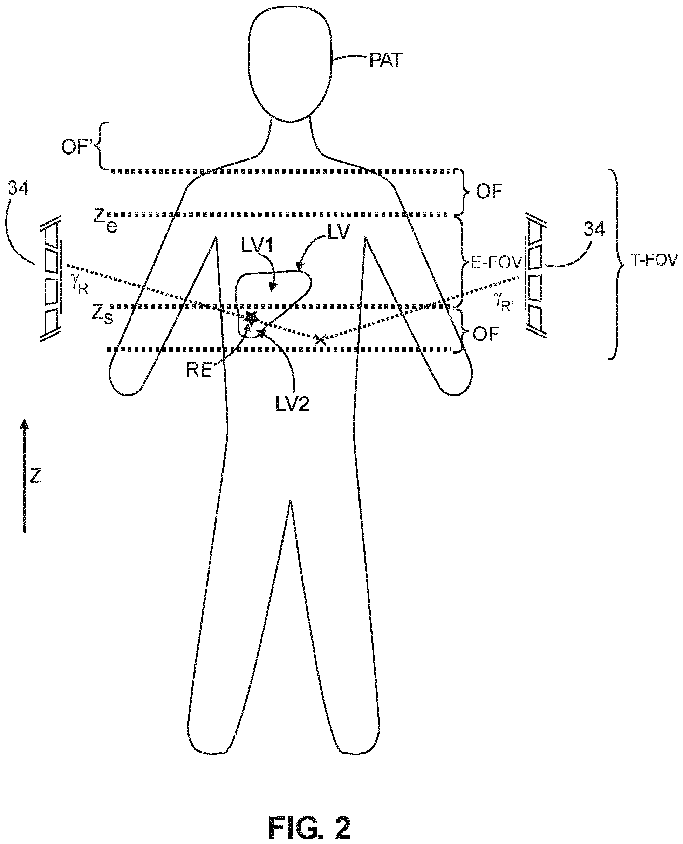

With continued reference to the hybrid or tandem imaging arrangement of Fig. 2, the imaging operation will now be explained in more detail. During imaging operation, the respective detector units 20, 34 acquire measurements in the form of projection raw data, comprising emission projection raw data $\pi_E$ and transmission projection raw data $\pi_T$. The emission projection raw data $\pi_E$ comprises gamma radiation count rates as detected at the PER detector ring 34. In emission imaging, the projection raw data may be acquired in list mode where the gamma count rates are associated with the respective position on the detector ring where the detection occurred. Emission projection raw data may be re-formatted from list mode into sinogram mode to obtain respective emission projection images.

The transmission projection raw data $\pi_T$ comprises X-ray intensities of attenuated x-radiation. The attenuation is partly due to absorption but also due to scattering. Scattering may also cause bogus gamma count rates to be recorded in the emission projection data $\pi_E$.

The image processing system IPS uses respective re-construction algorithms that re-construct the respective projection raw data $\pi_T$, $\pi_E$ into sectional slice imagery situated in multiple planes in the examination region ER perpendicular to the imaging axis Z, to form respective transmission and emission image volumes.

The reconstructed transmission and emission sectional imagery $I_T$, $I_E$ may be forwarded through a communication network CN for view on a display device DD, for other processing, or for storage in an image repository IR. The reconstructed emission sectional imagery $I_E$ maps tracer activity and distribution. The reconstructed transmission sectional imagery $I_T$ maps differential attenuation patterns caused in part by differential density distribution inside patients body such as soft tissue and bone for example.

Whilst each of the transmission and emission imagery $I_T$, $I_E$ may be displayed and/or processed in their own right, the transmission and emission imagery may be preferably combined to form a fusion image which provides functional as well as structural information. For present purposes, it is the emission imagery $I_E$ that is of main interest herein. As mentioned above, image quality (IQ) of the emission imagery $I_E$ may be compromised by attenuation and/or scattering contributions that may manifest as image artifacts. Such artifacts or other IQ degradations are undesirable as valuable diagnostic information may be obscured.

In order to reduce scattering artifacts, the image processing system IPS includes anti-scattering circuitry that allows reducing scattering, in particular in the emission imagery $I_E$, to produce scattering corrected or scattering reduced emission imagery $I_E$'.

The emission image scattering reduction will now be described in more detail. The scattering correction circuitry may include a scattering simulator SS and a scattering corrector SC. As mentioned above, the transmission imagery $I_T$

already includes information on the scattering experienced and this may be used by the simulator SS to simulate scattering events. From the simulated scattering events, scattering contributions can be computed which can then be used by the scattering corrector SS to remove those contributions from the scattering compromised reconstructed emission imagery $I_E$ to obtain the scattering reduced or scattering corrected emission imagery $I_E$'. In addition, the measured activity distribution in the emission imagery $I_E$ may itself be used to stimulate scattering by the scattering simulator SS. For improved scattering correction, the scattering correction sub-system SCS of the image processing system IPS as proposed herein includes an extension image estimator EE that computes an extension image $I_X$ for one or more out of field view portions OF. The extension imagery extends in particular the reconstructed emission image $I_E$. Optionally, the transmission image may also be so extended. The one or more extension volumes referred to herein as extension imagery $I_X$, may be used to estimate scattering events that, although outside the current field of view (FOV), may still contribute to measurements inside the field of view. Such out-of-FOV scatter events may be referred to herein as rogue or external (to the current axial FOV) scatter events. The extended imagery, in particular the extended emission image, allows simulating the rogue scatter contributions by simulator SS for the scattering corrector to use for improved scattering correction. The transmission image $I_T$ may be further used by an attenuation corrector (not shown) for attenuation correction of the emission image $I_E$.

The concept of FOV is now explained in more detail to facilitate the in-more depth description of the proposed scattering correction sub-system SCS. During the imaging procedure, the respective projection imagery $\pi E$ and $\pi T$ are acquired for a certain section along the imaging axis Z. Generally, the imaging axis Z coincides with the longitudinal axis of the patient as they reside in the examination region ER. This section has, on the imaging axis Z, a start at position $Z_s$ and an end at position $Z_e$ and defines thus an axial field of view for the emission imaging E-FOV. There is a similar section with start and end position for the transmission imaging T-FOV. The situation is shown in more detail in plan view in Fig. 2 to which reference is now made. The emission imager's field of view E-FOV extends along imaging axis Z from position $Z_s$ to $Z_e$,. Although not necessarily so in all scenarios, the axial emission field of view E-FOV is smaller and/or a sub-set of the larger axial transmission field of view T-FOV.

Acquisition of the projection raw data along the imaging axis Z for the section between start and end points $Z_s$, $Z_e$ may be effected by inducing a relative linear scan motion between patient and the gantry that holds the respective detector 34, 20. This linear motion along the imaging axis Z can be induced by the motorized patient couch 36 which is advanced through the examination region of both imaging modalities IA1, IA2 thereby causing acquisition of projection data at different bed positions along axis Z. The described scan motion along imaging axis Z is however not necessarily required in cases where a native thickness of the detector ring in axial direction Z is broad enough to cover the region of interest. It will be understood that in general the axial FOVs, be it for the transmission imager IA2 of the emission imager IA1, are composite structures as there may not be a single FOV that covers all the anatomy of interest. However, for present purposes, no distinction will be made on whether the various FOVs are composite or unitary, and we will understood the term "FOV" to indicate any area in image domain for which projection data has been collected and for which imagery has been reconstructed from said projection data.

The extension image estimator EE as proposed herein is preferably machine learning ("ML") based. It includes one or more machine learning models M, trained on training data. The ML enabled extension image-estimator EE extrapolates the extension imagery $I_X$ for out of field view portion(s) OF based in particular on the emission imagery $T_E$ re-constructed for actual axial field of view E-FOV of the emission imager IA1. The emission extension image Ix allows estimating and/or simulating rogue events RE that occurred out of the field of view OF, but nevertheless impact the emission detector 34 for the reconstructed axial emission field of view E-FOV. Rogue scattering events are illustrated in Fig. 2, at the example of abdominal imaging. Liver LV may comprises two parts LV1, LV2, one LV1 being inside the axial emission FOV E-FOV, whilst the other part LV2 is situated in the out of field of view volume OF. Rogue event RE (the location of which is indicated by a star symbol) may cause bogus readings at emission detector 34 due to rogue scattering event shown as "X" in plan view Fig. 2. The gamma photons of the rogue event RE are shown as $\gamma_R$ and $\gamma_R$' in Fig. 2. Such an out of field of view extension image $I_{X,T}$ may also be computed for the transmission image, for a respective out-of-field of view portion OF'. The notation "$I_X$" will be used herein for the emission extension image, as this is of main interest herein. If distinction is required, we will use the notion $I_{X,T}$ for the transmission extension image, and $I_{X,E}$ for the emission extension image.

The proposed image extension estimator EE uses as input the reconstructed emission imagery $I_E$ and optionally but preferably, in addition, the reconstructed transmission imagery $I_T$ to estimate extension imagery $I_X$ for the out of field of view portion OF. As will be explored in more detail, the transmission image, or in fact any other non-emission image, such an MRI image, preferably of the same patient serves as contextual anatomical input, to help the machine learning model to achieve better, more realistic estimates. The transmission image has thus an auxiliary, guiding role. The surview CT image may be used for example. The transmission image is in general not itself extended, although this may still be done in some embodiments, by the same ML model M or by a different model. Whilst tandem system are preferred, this is not a requirement, and the auxiliary image $I_A$, eg the transmission image, may derive from the past, and may be retrieved from the patient's medical file. In fact, it may not necessarily be required herein that the transmission image is from the same patient. It may be sufficient for it to relate to another patient, merely sharing with the current patient similar bio-characteristics, such as age, sex or physique. Preferably the auxiliary image $I_A$ at least relates to the same ROI, but even this requirement may be dropped if the model M has been trained on a large enough data set. In the following we will mainly refer to the transmission image $I_T$, but this is for illustration and according to one embodiment, with the understanding that other, auxiliary non-emission images $I_A$ obtained by other imaging modalities, notably MRI, are expressly also envisaged herein.

The emission extension imagery Ix computed by the extension image estimator EE may be two-sided or one-sided, extending beyond $Z_s$ or beyond $Z_e$ in cranial or caudal direction. In practice, the extension image $I_X$ may be computed herein for out of field portions OF extending beyond one or both of $Z_s$ or $Z_e$ for about 10cm. The volume axial FOV of the extension image $I_X$ is hence about 10cm thick in axial direction measured from $Z_s$ or $Z_e$. In one-sided extensions, the image $I_X$ thus covers 10cm along axis Z, whilst in two-sided extensions the margin is 2 x 10 = 20cm. Scattering events outside this margin are unlikely to have any contribution and can be disregarded herein. However, the above described extension margin of 10 cm along imaging axis Z is an example only, and safety margins less or greater than 10cm are also envisaged herein. The extension imagery on either side or both sides of the axial emission field of view E-FOV may be contiguous with the reconstructed emission field E-FOV, or there may be an overlap on either or both sides. Gaps are preferably avoided for better performance.

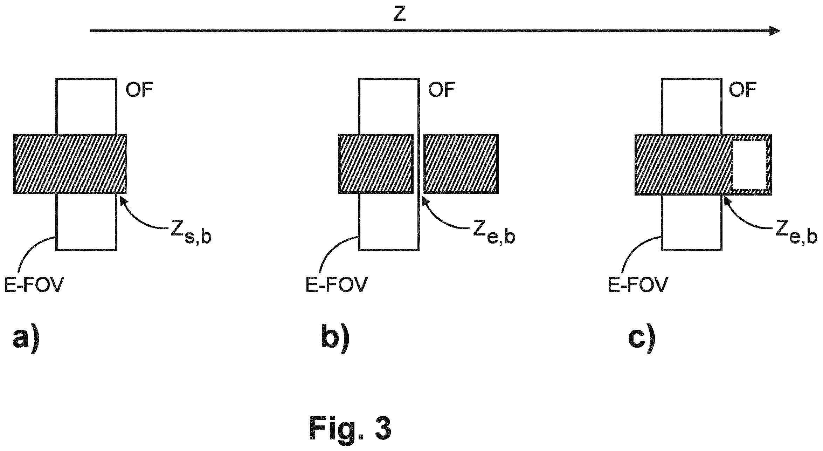

Reference is now made to plan view Fig. 3 which demonstrates deficiencies of approaches where extension imagery is merely extrapolated without machine learning from the last available slice at either border location $Z_{s,e}$. For example, in Fig. 3A a situation is sketched which may lead to over-correction for out of field view scattering. This can happen if the border slice at border location Zs,e indicates a certain tracer activity, and this is "blindly" extrapolated a set distance further into the out of field of view volume OF, although the actual activity area, shown as a shaded rectangle, extends only a shorter distance into the said out of field view portion OF.

Fig. 3B represents a situation which may result in under-correction for out of field view scattering. For instance, the border slice at $Z_{b,e}$ may indicate no or little activity due to a gap region, whilst in reality there is indeed a sizable portion of nuclear activity in the out of field view volume OF that has been effectively ignored. The extrapolation was mislead by the gap.

Lastly, Fig. 3C shows another situation which may result in over correction for out of field view scattering contributions. Here the border slice at $Z_{b,e}$ indicates a certain activity and whilst the respective activity area does extend well beyond the actual field of view border, nevertheless the area happens to includes one or more cavities where there is in fact no activity detectable.

As can be gathered from the above described non-ML extrapolations in scenarios 3A-C, the deficiencies, the over or under-estimation, arise because there is no anatomical knowledge used that may help better estimate the areas of activities, given the knowledge as per the known reconstructed images $I_E$ and/or $I_T$.

In the proposed machine learning approach, anatomical knowledge combined with expected activity distribution is encoded in the machine learning model M trained on historic imagery. This allows for a more robust estimation of out of field of view tracer activity, and hence more accurate simulation of rogue scattering contributions that tend to spill over into from out of field of view region into the reconstructed emission field of view E-FOV. The proposed approach is in particular useful for non-total body PET or SPECT scans, such as thoracic or abdominal scans or other scans where only a part of the anatomy along axis Z is scanned.

The proposed machine learning model allows spill-over effects of rogue scatting events to be mitigated by accurate modeling the most probable extension of the tracer activities or attenuation distribution from outside of the emission FOV E-FOV, based on the anatomy in the region as well as the activity inside of the FOV. The proposed machine-learning algorithms based on the described input features may furnish a basis for a more accurate scattering simulation. This could improve the quality in the axial outer regions of a PET scanner for example, and may reduce a possible SUV-bias.

The extension image estimator EE is operable in two modes, in a learning mode and a deployment mode. In learning mode, to be described in more detail below, the machine learning model M is trained on historic imagery by using machine learning training algorithms. The training may be a one-off operation or may be done repeatedly as new training data becomes available. Once the model has been sufficiently trained the extension image estimator EE is ready for deployment and can be used in clinical practice to improve scattering correction as described above, operating on new, hitherto not seen imagery, not from the training data set.

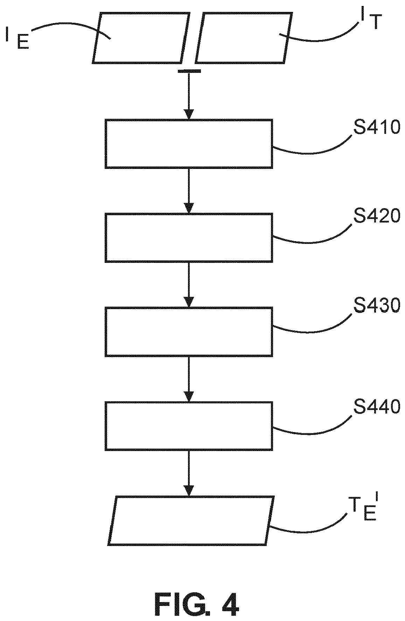

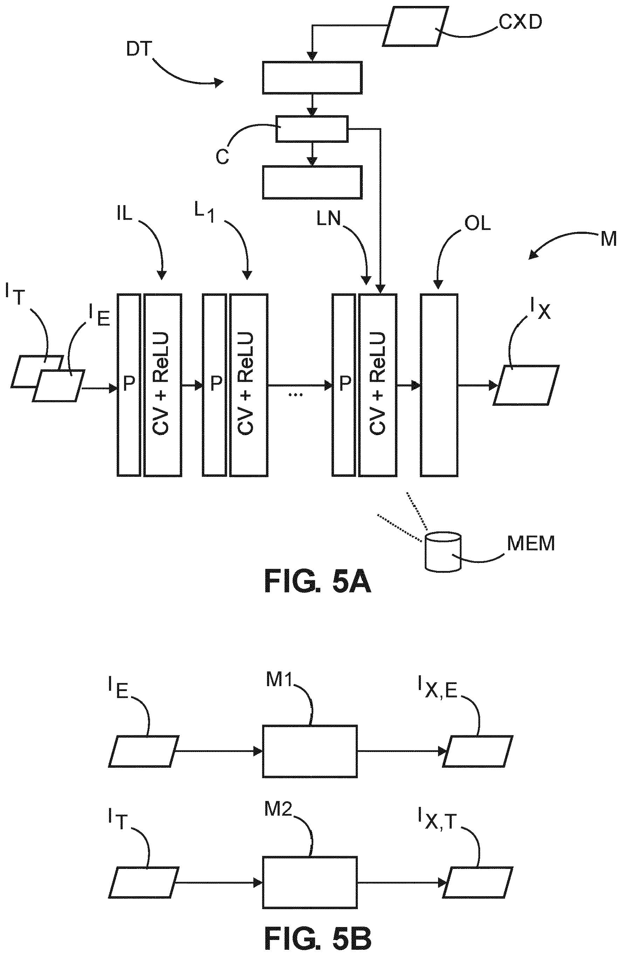

Assuming that the model M has been sufficiently trained - with the training procedure described more fully below at Figs. 5-9 - reference is now made first to Fig. 4. This shows a flow chart for a method of image processing which may be used to improve scattering correction in emission imaging such as PET or SPECT. The steps may be used to estimate axial extension imagery for a volume outside a reconstructable field of view E-FOV for emission or transmission imaging. Whilst the method may be used to implement exertion imager estimator EE, the method may also be understood as a teaching in its own right, not necessarily tied to the above described.

In step S410 reconstructed emission image and, optionally, a reconstructed transmission image for respective field of views E-FOV, T-FOV is received. In embodiments, the transmission FOV T-FOV is larger and includes the emission FIV E-FOV. In step S420 it is at least the reconstructed emission image that is used to compute, based on a pre-trained machine learning model, the emission extension image for one or more out of FOV relative to the emission FOV E-FOV. The computed emission extension image has one or more portions that are at least partly outside the axial field of E-FOV view of the received emission image. The estimated extension image may be one or two-sided, so is not necessarily topologically connected. For better contextual and anatomical information, the machine learning model may also process in addition to the emission image, non-contextual non-image data such as patient records, patient bio-characteristics or any other such data that furnishes more details on the imaged patient. Optionally, it is also the reconstructed transmission image that is co-processed with the reconstructed emission image to compute the emission extension image.

The FOV of the reconstructed emission image E-FOV with the emission extension image appended is essentially coterminous with the FOV of the transmission image T-FOV, or may extend even beyond the transmission field of view T-FOV. As an option, the machine learning model, or a different such model, may be used to extend the FOV of the transmission image, if required, although such application is of lesser interest herein as the transmission field of view T-FOV in in general larger than, and include the, emission field of view E-FOV, as shown in Fig. 2.

At step S430 the estimated extension imagery is used together with the received transmission and emission imagery to simulate scattering events to estimate scattering contributions. Scattering simulation technology envisaged herein include Monte-Carlo or SSS-methodology (single-scatter-simulation) as proposed by Watson etal. in "A Single Scatter Simulation Technique for Scatter Correction in 3D PET", published in Grangeat P., Amans JL. (eds) "Three-Dimensional Image Reconstruction in Radiology and Nuclear Medicine", Computational Imaging and Vision, vol 4, Springer, Dordrecht, pp 255-268, (1996). Multiple event scattering simulation techniques are also envisaged.

At step S440, the simulated scattering contributions are processed together with the received emission imagery to correct for scatting thereby produce a scattering reduced emission image which can then be made available for displaying, storing or may be otherwise processed. For example, the PET measurements are weighted in proportion to the amount of simulated scatter contribution that is expected along the respective line of response. The scattering contribution is preferably simulated in projection domain, with projection data in sinogram form. The simulated scattering may be subtracted from the measured projection data $\pi_E$. The scattering corrected image $I_E'$ is then "re"-reconstructed based on the so modified projection data. With the extension image extending far enough in axial direction, the scattering estimate and correction can be improved. Any other scattering correction scheme for emission imaging is also envisaged herein as reported in the literature. The extension image itself may also be displayed to inform about locations of rogue scattering events, but the extension image is preferably not used for diagnostics. An appropriate warning note may be displayed concurrently with the extension image. Alternatively, the extension image $I_X$ is not displayed at all.

Whilst the above has been described with main reference to tandem imaging systems combining a CT imaging modality and a PET or SPECT imaging modality, this disclosure is not so confined, as tandem systems combining PECT/SPECT modalities with other imaging auxiliary modalities such as MRI are also envisaged herein.

The proposed image extension estimator EE may be used with any kind of preferably tandem imaging system such as PET/CT and SPECT/CT, as well as PET/MR and SPECT/MR scanners to obtain better images. Existing imaging system may be retro-fitted with the proposed image extension estimator EE as an update.

The proposed method and image extension estimator EE is especially beneficial for imaging patients with a high BMI (body mass index) where images tend to be deteriorated by a high scatter fraction due to the surrounding fat tissue and the high activities administered to compensate.

The proposed method and image extension estimator EE might be used to virtually increase the usable axial FOV (eg, per bed position), thus reducing the scanning section along imaging axis Z. Scan time can hence be reduced, in particular for whole-body acquisitions. A smaller axial FOV for CT also allows reducing dose. It is no longer required to have the transmission field of view FOV-T larger than the emission field of view E-FOV. Both can be coterminous. Both can robustly extended to by the proposed method and image extension estimator EE.

Reference is now made to Fig. 5 which schematically shows an embodiment of a machine learning model M that may be used to implement the extension image estimator EE. Preferably, an artificial neural network ("NN")-type model M is used, as is shown schematically in Fig. 5A. The NN model M may be of the feed forward type as shown in Fig. 5A, or is may be of the recurrent type.

The machine learning model M may be stored in one (or more) computer memories MEM. The pre-trained model M may be deployed as a machine learning component that may be run on a computing device PU, such as a desktop computer, a workstation, a laptop, etc or plural such devices in a distributed computing architecture. Preferably, to achieve good throughput, the computing device PU includes one or more processors (CPU) that support parallel computing, such as those of multi-core design. In one embodiment, GPU(s) (graphical processing units) are used.

The NN model M may comprise a plurality of computational nodes arranged in layers in a cascaded fashion, with data flow proceeding from left to right and thus from layer to layer. As said, recurrent networks are not excluded herein. Convolutional networks have been found to yield good result when processing image data, whist recurrent NNs are preferable for sequential data such as cross-sectional slice in image volumes.

In deployment, the input data $X$ is applied to input layer IL, such as $X=I_E$, $I_T$ or another auxiliary image $I_A$ such as an MRI image, optionally complemented with contextual non-image data CXD (on which more below). Optionally still, and as detailed below, a combination of the emission image $I_E$ and the auxiliary image $I_A$, such as the transmission image $I_T$, may be co-processed. The input data $X$ propagates through a sequence of hidden layers $L_1$-$L_N$ (only two are shown, but there may be merely one or more than two), and is then regressed at an output layer OL into an estimate output $M(x)$. The output $M(x)$ may be the emission extension image $I_{X,E}$ and/or the transmission extension image $I_{X,T}$, or any other auxiliary extension image $I_{A,X}$ such as an extension MRI image or other still.

The model network M may be said to have a deep architecture because it has more than one hidden layers. In a feed-forward network, the "depth" is the number of hidden layers between input layer IL and output layer OL, whilst in recurrent networks the depth is the number of hidden layers, times the number of passes.

The layers of the network, and indeed the input and output imagery, and the input and output between hidden layers (referred to herein as feature maps), can be represented as two or higher dimensional matrices ("tensors") for computational and memory allocation efficiency. The dimension and the number of entries represent the above mentioned size. Preferably, some or all of the layers are convolutional layers, that is, include one or more convolutional filters CV which process an input feature map from an earlier layer into intermediate output, sometimes referred to as logits. A given layer $L_m$ may implement the same number of convolution operators CV or the number may differ for some or all layers. A convolutional operator CV implements a convolutional operation to be performed on its respective input. The convolutional operator may be conceptualized as a convolutional kernel.

An optional bias term may be applied by addition for example. An activation layer processes in a non-linear manner the logits into a next generation feature map which is then output and passed as input to the next layer, and so forth. The activation layer may be implemented as a rectified linear unit RELU as shown, or as a *soft-max*-function, a sigmoid-function, *tanh*-function or any other suitable non-linear function. Optionally, there may be other functional layers such as pooling layers or drop-out layers to foster more robust learning. The pooling layers reduce dimension of output whilst drop-out layer sever connections between node from different layers.

In embodiments, downstream of the sequence of convolutional layers there may be one or more fully connected layers among layers $L_j$. A convolutional layer is distinguished from a fully connected layer in that an entry in the output feature map of a convolutional layer is not a combination of all nodes received as input of that layer. In other words, the convolutional kernel is only applied to sub-sets of the input such as a feature map as received from an earlier (convolutional) layer. The sub-sets are different for each entry in the output feature map. The operation of the convolution operator can thus be conceptualized as a "sliding" over the input in steps or "stride", akin to a discrete filter kernel in a classical convolution operation known from classical signal processing. Hence the naming "convolutional layer".

In a fully connected layer, an output node is in general obtained by processing all nodes of the input layer. The stride of the convolutional operators can be chosen as one or greater than one. The stride defines how the sub-sets are chosen. A stride greater than one reduces the dimension of the feature map relative to the dimension of the input in that layer. A stride of one is preferred herein. In order to maintain the dimensioning of the feature maps to correspond to the dimension of the input imagery, a zero padding layer P may be applied in embodiments. This allows convolving even feature map entries situated at the edge of the processed feature map.

Weight of the layers (such as the filter elements or weight of the fully connected layers) form at least a part of the model parameters $\theta$. It is in particular these weights that are adjusted in the learning phase.

If both the emission E-FOV and the transmission field of view T-FOV is to be extended, both extensions can be computed by a single machine learning model such as for example as shown in Fig. 5A. In this case, the two inputs, the transmission image $I_T$ and the emission image $I_E$ may be processed in different channels, each of the two images arranged in an $n \times m \times 2$ 3D matrix structure ($n,m$ being the rows and columns of pixels/voxels of the two images), similar to the manner in which color-imagery may be processed, where each channel corresponds to one color channel R-G-B. If the transmission image is larger than the emission image, as it usually is, zero-padding may be used to accommodate both images in a common matrix structure, with the images preferably spatially registered to one another. Such registration is either native as in most tandem imagers especially in those of single-gantry construction, or a registration algorithm is used to achieve registration. Such registration is optimal however, but may help to achieved quicker learning. In this multi-channel embodiment, there are hence a CT channel and a PET channel for example. Zero-padding may also be done instead or in addition along Z-direction.

The described multi-channel processing is useful even when only one of the extensions is of interest, in particular, only the emission extension $T_{X,E}$ In this case, the multi-channel embodiments allow to co-process the emission image with the transmission image by the same network. In this case, the transmission image provides useful addition anatomical context to enable better, more robust learning, with quicker convergence to a useful set of adjusted set of parameters. The transmission image thus provides anatomical context/boundary conditions to guide the leaning more quickly to parameter solutions that deliver realistic results.

Alternatively, and as is shown in Fig. 5B, a multi-model machine learning model M may be used comprising sub-models M1, M2 arranged for example in parallel, each comprising respective deep learning architectures with one or more hidden layers. In other words, the emission image is applied as input to one model M1, propagates through the said sequence of hidden layers to then emerge at the output layer as the required extension image for the m emission out of field of view portion OF. In a similar manner, the transmission image is fed through a separate sequence of layers in the other mode M2, to compute the transmission extension image for the transmission out of field of view portion. Co-processing of the two images to boost learning in the emission channel as mentioned above may also be done in a multi-model machine learning model M1,M2, where the imagery is processed in separate strands of layers, but with "cross-channel" skip-connection from the transmission image channel into the layers of the emission image channel. The above mentioned anatomical and/or scattering context to boost learning rate and/or robustness may be thus provided.

In each of the above described embodiments, once the extension portion for the out of field of view region OF is computed, this can be appended to the respective reconstructed image to obtain a respectively extended emission and/or transmission image Ix which can then be used for scattering simulation and/or scattering correction as described above.

The particular structure of the reconstructed input images, the emission image and/or the transmission image, may be leveraged as follows. The images are volumes with slices arranged in sequence along imaging axis Z. This sequential axial correlation may be harnessed by arranging model M as a, at least in parts, recurrent neural network where feature maps are fed back to previous layer(s), as opposed to feed-forward models. RNN layers are useful in learning the extensions beyond the current FOV. For example the RNN layers may learn to extend the transmission image or the emission image, based largely on a sequence of last adjacent slices at the border portions $z_s, z_e$ in the respective FOV. The convolutional neural network layers learn the anatomy and function of the next voxels. In addition, in order to harness spatial correlation within slices, convolutional type networks are useful. Preferably, the model is thus a multi-model including both, RNN layers and CNN layers.

If patient bio-characteristics, or other non-image contextual data CXD is to be used, this too may be feed into each of the above described NN models as a separate non-image context data CXD channel. However, non-image context date CXD may suffer from sparse representation which may be undesirable for efficient processing alongside the emission and/or transmission image data. The non-image context data CXD may be hence processed first in a separate machine learning (sub-)model DT so as transform the non-image context data CXD into a more dense representation. The improved, denser, representation may then be fed as an additional channel in form of additional feature maps, or "pseudo-images" PI, into one of the hidden layers $L_N$ of the image data processing strand of model M. The feature maps for the context data CXD may for example be concatenated with the feature maps produced in the said layer of the image processing strand. The non-image data can thus be processed alongside the image data. The non-image context data so transformed into the said pseudo image/feature map is preferably of correct size that corresponds to the size of the feature map at the stage in the hidden layers where it is to be fed into. The transforming machine learning component that transforms into the denser representation may be arranged as an autoencoder network DT. Such networks have a bottle-neck structure that allow transforming input into a denser representation c, the "code", usually of smaller dimension than the input imagery. The input to the autoencoder DT may be provide initially as a one-hot encoding representation of the non-image context data or by other suitable encoding schemes, and this is then transformed by the autoencoder DT into the denser representation of reduced sparsity which may then be co-pressed with the image data as described above. Instead of auto-encoder, other models may be used.

Each of the above described models may be considered as one single super-model comprising sub-models or as a network of connected models with output transfer. The (sub-)models may be held on a single memory MEM or may be held in a distributed fashion across a number of memories, servers etc, preferably communicatively coupled over a communication network. The implementation of the models, that is their processing of the data, may be through one or more processing units PU. The processing unit(s) PU may be unitary, or may arranged in distributed architecture across a number of computing systems.

It will be understood that the above described model M in Fig. 5 A,B are merely according to one embodiment and is not limiting to the present disclosure. Other neural network architectures are also envisaged herein with more or less or different functionalities than describe herein. What is more, models M envisaged herein are not necessarily of the neural network type at all. For example, statistical regression methods based on sampling from training data are also envisaged herein in alternative embodiments. Instance-based machine learning is also envisaged herein, where the model is encoded by the collection of training data. Principle component analysis (PCA) or other similar techniques may be used.

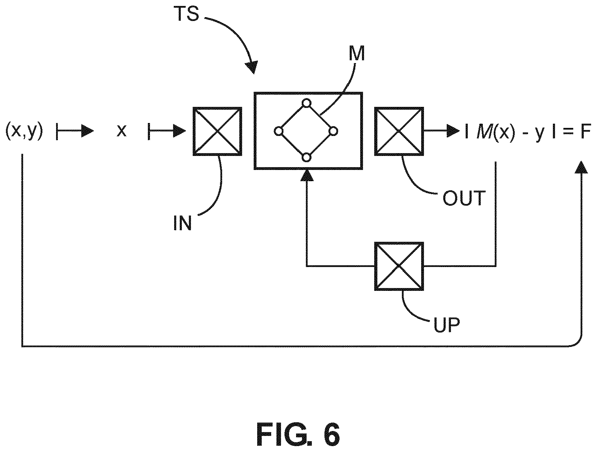

Reference is now made to Fig. 6 which shows a set-up of a training system TS to train the above described model(s) M, M1, M2, DT. The parameters of the model are adapted based on training data TD. The parameters to be adapted may include in particular the filter elements discussed above and/or the bias elements, if required. The models may be trained jointly or separately.

For example, in the above described architectures for NN-type models M, the totality of the weights of the layers may define some of the parameters of the machine learning model. The parameters may further include the bias elements if any, or any other parameters of the layers. The weights may differ for each layer and each layer may include plural convolutional operators some or each having a different set of kernels.

The parameters are adjusted during the training phase to effect the learning. Once the training phase has concluded, the fully learned weights, together with the architecture in which the nodes are arranged, can be stored in one or more data memories MEM and can be used for deployment.

The training data comprises $k$ pairs of data $(X_k, Y_k)$. $k$ may run into the 100s or 1000s. The training data comprises for each pair $k$ a training input data $X_k$ and an associated target $Y_k$. The training data is thus organized in pairs $k$ in particular for supervised learning schemes as mainly envisaged herein. However, it should be noted that non-supervised learning schemes are not excluded herein, in particular PCA or other.

The training input data $X_k$ and the targets $Yk$ may be obtained from historical image data acquired in the lab or previously in the clinic and held in image repositories, such as the PACS of a HIS (hospital information system) for instance. Procuring of training data will be explore more fully below.

If training is to include contextual data CXD, there is in general no contextual data included in the target $Y_k$ for any pair $k$, such as in the multi-strand models as discussed above in relation to Fig. 6. In other words, for learning with contextual data the pairs may in general have a form $((X_k, d), Y_k)$, with non-image context data $d$ only associated with the training input $x_k$, but not with the target $Y_k$.

In the training phase, an architecture of a machine learning model M, such as any of the NN networks in Fig. 5A,B, is pre-populated with an initial set of parameters, such as the weights, biases, etc. The parameters $\theta$ of the model NN represent a parameterization $M^\theta$, and it is the object of the training system TS to optimize and hence adapt the parameters $\theta$ based on the training data $(x_k, y_k)$ pairs. In other words, the learning can be formulized mathematically as an optimization scheme where a cost function F is minimized although the dual formulation of maximizing a utility function may be used instead.

Assuming for now the paradigm of a cost function $F$, this measures the aggregated residue(s), that is, the error incurred between data estimated by the neural network model NN and the targets as per some or all of the training data pairs $k$:

$$argmin_\theta F = \sum_k \| M^\theta(x_k) - y_k \| \qquad (1)$$

In eq. (1) and below, function $M()$ denotes the result of the model NN applied to input $x$. The cost function may be pixel/voxel-based, such as the L1 or L2-norm cost function. A squared Euclidean-type cost function in (1) (such as least squares or similar) may be used for the above mentioned regression task when computing the extension image. In training, the training input data $X_k$ of a training pair is propagated through the initialized network M. Specifically, the training input $X_k$ for a $k$-th pair is received at an input IL, passed through the model and is then output at output OL as output training data $M^\theta(X)$. Any suitable measure $\|\cdot\|$ may be used herein, such as a $p$-norm, squared differences, or other, to measure the deviation, also referred to herein as residue, between the actual training output $M^\theta(X_k)$ produced by the model M, and the desired target $Y_k$.

The output training data $M(X_k)$ is an estimate for target $Y_k$ associated with the applied input training image data $X_k$. In general, there is an error between this output $M(X_k)$ and the associated target $Y_k$ of the presently considered $k$-th pair. An optimization scheme such as backward/forward propagation or other gradient based methods may then be used to adapt the parameters $\theta$ of the model M so as to decrease the residue for the considered pair $(X_k, y_k)$ or a subset of training pairs from the full training data set.

After one or more iterations in a first, inner, loop in which the parameters $\theta$ of the model are updated by updater UP for the current pair $(X_k, Y_k)$, the training system TS enters a second, an outer, loop where a next training data pair $X^{k+1}, Y^{k+1}$ is processed accordingly. The structure of updater UP depends on the optimization scheme used. For example, the inner loop as administered by updater UP may be implemented by one or more forward and backward passes in a forward/backpropagation algorithm. While adapting the parameters, the aggregated, for example summed, residues of all the training pairs are considered up to the current pair, to improve the objective function. The aggregated residue can be formed by configuring the objective function $F$ as a sum of squared residues such as in eq. (1) of some or all considered residues for each pair. Other algebraic combinations instead of sums of squares are also envisaged.

It will be understood however that the model-based approach eq (1) is merely one among a host of other ML based approaches, explicit model-based or instance-based (with implicit modelling), all envisaged herein in alternative embodiments.

Optionally, one or more batch normalization operators ("BN", not shown) may be used. The batch normalization operators may be integrated into the model M, for example coupled to one or more of the convolutional operator CV in a layer. BN operators allow mitigating vanishing gradient effects, the gradual reduction of gradient magnitude in the repeated forward and backward passes experienced during gradient-based learning algorithms in the learning phase of the model M. The batch normalization operators BN may be used in training, but may also be used in deployment.

With continued reference to Fig. 6, the training data is provided in pairs (X, Y). X represent the training input data/image X, whilst Y represents the target associated with the training input image X. For present purposes, the training input image and the target may be sourced from existing historic emission imagery as can be found in image repositories such as PACS or other medical image data bases. These data bases usually hold for patients treated in the past the respective image data acquired such as in PET/SPECT/CT/MRI or other scans. Such data bases can be suitably queried to assemble the training data as envisaged herein as follows. For a given region of interest, say the thorax region, emission scans are identified for multiple patients in the data base. Preferably, historic whole body scans are identified for multiple patients but this is not a necessity.

The historic emission data set is then accessed and truncated or divided into two or more parts. One part comprises the region of interest one wishes to image during deployment, for instance the thorax region. This part forms one item of training input data X. The other one or two parts at the cranial and/or caudal end of the training input data X represents the extension(s) to be learned, and thus the target data Y associated with that input X. This target extension Y may or may not overlap with the selected section for the region of interest that represents the training input image X. In a similar fashion training input-versus-target pairs (X, Y) may be prepared by suitable sub-division of image data for other patient to obtain a training data set TD. In a similar manner, training data may be obtained for whole body CT scan image data and/or MRI image data or other modalities. If the model is to be trained for co-processing of emission and transmission data and optionally context data CXD, a respective transmission input image for the ROI of interest and the non-image context data may suffice, and target(s) is not necessarily required in such cases. The pairs for co-pressing training may thus have the form (X, Y) = [(X1,X2, d), Y], with X1 the emission training input, X2 the transmission training input, and d the non-image context data CXD. The context data may be sourced from patient databases or may be read-out from metadata such as header-data in imagery of DICOM format or similar.

The training system as shown in Fig. 6 can be considered for all learning schemes, in particular supervised schemes. Unsupervised learning schemes may also be envisaged herein in alternative embodiments. GPUs may be used to implement the training system TS.

The fully trained machine learning model M may be stored in one or more memories MEM or databases, and can be made available as pre-trained machine learning models for use in extension image estimator EE. The trained model may be made available in a cloud service. Access can either be offered free of charge or their use can be granted via license-pay or pay-per-use scheme.

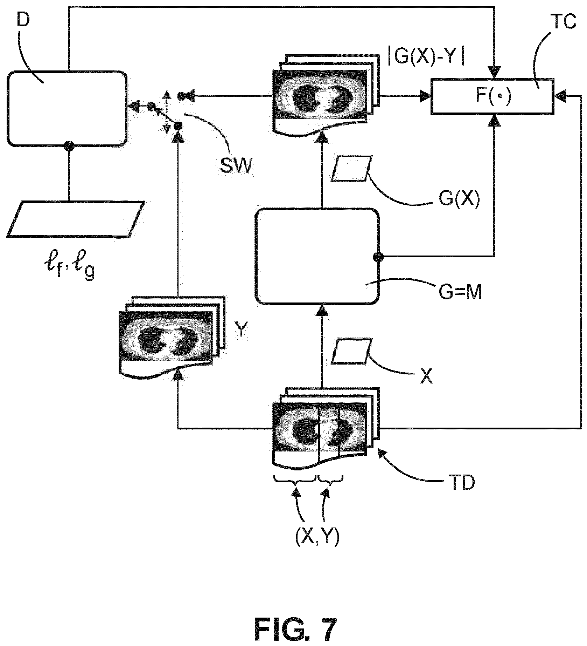

Further aspects on training will now be provided with reference to Figs. 7-9. For clarity, in Figs. 7, 8 and 9, as they pertain mainly to training, the training imagery/data from the training data set TD may be designated with a tilde "~", in distinction to imagery encountered during deployment where no "~" is used.

Reference is now made to Fig. 7, which shows a particular training system according to one embodiment envisaged herein. The system uses an architecture framework for NN models referred to as a generative adversarial network ("GAN"). GANs have been previously described by Ian Goodfellow et al in "Generative Adversarial Nets", available on preprint server at arXiv:1406.2661v1, published 10 Jun 2014. GANs comprise two NN models, a discriminator (network) D and a generator (network) G.

It is proposed herein to use this GAN framework or similar to train model M. The model architecture for the model M to be trained may be configured as in any one of the above described embodiments in Fig. 5A, B or other.

The GAN framework is so configured that the model M to be trained functions as the GAN's generator network G.

Specifically, the generator may be arranged at least in parts as recurrent neural network (RNN). In addition, the RNN sub-model of generator G may be combined with a convolutional sub-model to obtain a combined CNN and RNN model for generator G. Alternatively still, the generator is a CNN

The discriminator D is set-up as a an NN-classifier. The discriminator D may be arranged as a deep fully connect network, a deep fully convolutional network or as a hybrid network including one or more layers of both type. The discriminator D may include as output layer a combiner layer such as soft-max layer that classifies the discriminator input into two labels, fake or genuine $<\ell_f, \ell_g>$. The discriminator D output may thus be represented as s 2D vector.

In operation during training the GAN set-up works as follows. The generator G predicts, based on a training emission input image X = $\tilde{T}_E$ draw from the training data set TD, an estimate of an extension image G(X). The discriminator D attempts two discriminate between generator outputs, fake, and genuine, ground truth targets Y = $\tilde{T}_X$ as held in the training set TD. By way of a switch SW, random or deterministic, the discriminator D is thus provided, in iteration cycles of an outer loop, with either the target Y associated with X or with the generator output G(X) and produces a classification result $\ell_f, \ell_g$. The fake label $\ell_f$, is correct if the discriminator D input is the generator output G(X). The genuine label $\ell_g$ is correct if the discriminator D input is the target Y drawn from the training set. The classification may or may not be correct. A training controller TC administers a cost function based on which the parameters of generator G and discriminator D are adjusted. The cost function represents two opposed objectives similar to a zero-sum-game: the objective in respect of the discriminator D is to maximize its probability of correct labelling, whilst the objective in respect of generator G is produce output so that the discriminator D cannot statistically discriminate between the two image types, thus producing correct labelling only at about a 50% probability.

The parameters of the two models G,M may be adjusted in a min-max procedure in alternate manner in separate runs of iteration in one or more cycles an inner loop. Optimization strategies may include back propagation or other gradient based methods. Once the optimization in the inner loop terminates, system TS enters into outer loop, in a the next iteration and drawn in a new training input X from the training Data, and switch provides input to the discriminator G, and so forth.

After a sufficient number of iterations though both loops, that is once the discriminator D can no longer discriminate between genuine and fake imagery, the generator G is considered fully trained. The current set of parameters in the current architecture may then be made available as model M for extension image prediction for used in deployment in extension image estimator EE. The discriminator D is of lesser interest herein and may be discarded. The GAN framework allows thus joint training of both models G,M, but only the generator G is of interest herein for extension image estimation.

The following loss function may be used for the GAN setup:

$$\min_{\theta_G} \max_{\theta_D} F(G,D) = \sum_{j=1}^{M}(logD(Y^*) + \log(1 - D(G(X)))) \qquad (2)$$

Summation $j$ is over the training data, and $Y^*$ is either the generator training output G(X) or X's true target extension Y drawn from the training data. $Y^*$ is determined by the switch SW. The right side of eq (2) represents a measure for comparing probability distributions, as the output of networks G,D may be considered as samples drawn from two probability distribution, the ground truth distribution and the distribution underlying operation of the generator G. The term in (X) relates to the binary cross-entropy measure. Other measures for comparing distances between probability distributions may be used instead, such as the Kullback-Leibler divergence (KLD)-measure or others. Other training schemes for GAN and/or other cost function configuration are also envisaged herein in embodiments.

As mentioned above, the model M for initial image extension in the GAN framework may be trained on input based on preferably both the emission image and the associated auxiliary imagery, such as the transmission image $\hat{I}_T$, the CT image for example as described above. The auxiliary imagery, provided by auxiliary or complementary modality such as the CT or MRI, preferably pertains to the same patient and has preferably been acquired with the above described tandem imaging systems for better registration. Alternatively, it is both the emission image and the auxiliary image that are extended to obtain respective extension images $\hat{I}_X$, $\hat{I}_X'$ for each.

In any of the above described models, once trained, the model is expected to have learned the respective "standard" tracer activity in the relevant region of interest such as organs from patient population as captured in the training data TD. With this knowledge, the model learns to properly scale the tracer activity or the organ activity based on the individual patient in deployment. The model thus learns the latent mapping between the tracer/organ activity in the truncated image and the tracer/organ activity in the out-of-field of portion OF. The learning may illustrated with reference to the liver example in Fig. 2. A PET image of a patient may represent two parts LV1, LV2 of the liver LV as mentioned above in Fig. 2. In order to robustly extend this PET image, the trained machine learning model M identifies voxels in the border portion, for example the last slice of voxels, that represent liver tissue. The model M learned that the activity distribution of the liver is homogeneous for similar patients. As the SUV (standard-uptake-value) in the upper part of the liver is only 0.9 for example, the trained model M extends the activity distribution in the liver out of the FOV to 0.9 and used its anatomical knowledge to estimate the extent of hidden part LV2 of the liver. This yields a good estimate of tracer activity distribution which can be used for scattering simulation and correction. The region that is not part of the liver is estimated by the tracer concentration that was learned from similar patient images that incorporated this region.

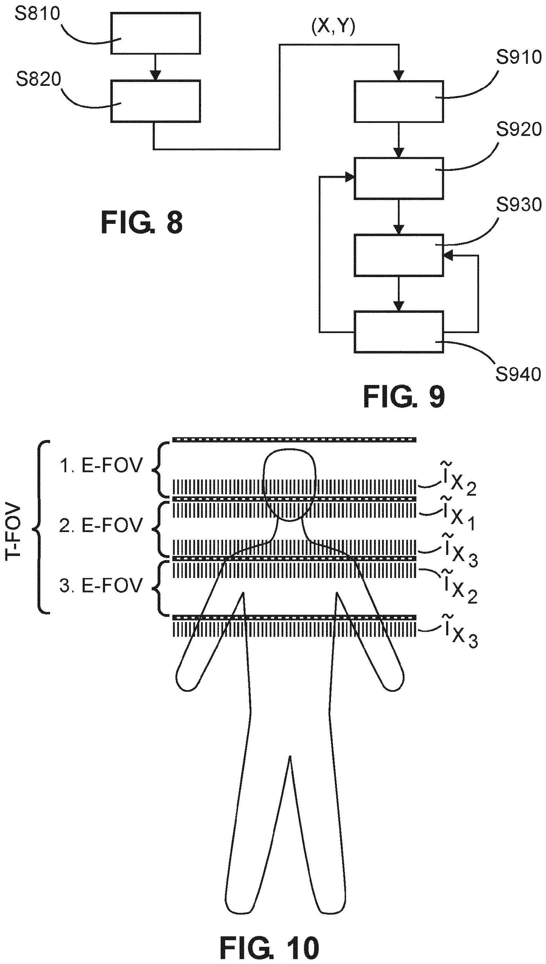

Reference is now made to Figs. 8 and 9 which show flow charts of computer-implemented methods for training machine learning models as described above, or for facilitating such training as described above.

Specifically, flow chart Fig. 8 shows steps related to assembling the training data, whilst flow chart Fig. 9 relates to the training algorithm that is operable on training data.

Turning first to the flow chart in Fig. 8, at step S810 historic image data, such as whole body image data sets, are identified in medical image databases or other image data repositories. The whole body data set or similar includes preferably imagery reconstructed for different portions of a patient along the imaging axis Z. The total body volume can be truncated to obtain partial image data that pertains to the respective region of interest such as a thorax portion etc. The partial image data for the training input image X. One or both of the remainders at the cranial or caudal end of the truncation, or a certain section(s) thereof, preferably about 10cm thick in axial direction, is/are then designated as a target Y. The target Y is associated at step S820 with the truncated partial image data which represents the training input image X, to so obtain a pair of image data (X,Y) for a given patient and region of interest.

The above steps may be repeated for preferably multiple patients $j$ for the same region of interest to build up a training data set $(X,Y)^j$ for a given region of interest. The image data may be so processed for a plurality of such regions of interest, to obtain essentially for each region of interest $k$ a respective training data set $(X,Y)^j_k$.

Whilst whole body image data are preferred herein to assemble therefrom the training data as it may be used or various ROIs, it may suffice in other instances to merely identify scans with large enough axial FOV that include the ROI, with sufficient allowance at the caudal and/or cranial end for the extension image target.

As can be seen, the training data can be procured herein without explicit expert labelling, thus making the training data procurement easier and cheaper to administer. The truncation of the images can be automated. A large training data set TD can be built, which allows for good generalized learning. Every historic scan data broad enough to cover the region of interest, for example a TB scan, may be used train the model M. Additionally, every bed position from every whole body scan can be used to predict regions from head to hip.

Given a suitable training data $(X,Y)^j_k$ from a sufficient number j of patients for a particular region of interest, reference now made to flow chart Fig. 9. The flow chart includes the training steps for training the model(s) M of any one of the above described embodiments based on the training data. Briefly, an initial set of parameters of the model(s) M is adjusted based on the so sourced training data pairs $(X,Y)^j_k$.

A step S910 training data is received in the form of pairs $(X_k, Y_k)$. Each pair includes the training input $X_k$ and the associated target $Y_k$. $X_k$, as defined in Fig. 7 above. At step S920, the training input $X_k$ is applied to an initialized machine learning model NN to produce a training output.

At step S930 a deviation, or residue, of the training output $M(Xx_k)$ from the associated target $y_k$ is quantified by a cost function $F$. One or more parameters of the model are adapted at step S940 in one or more iterations in an inner loop to improve the cost function. For instance, the model parameters are adapted to decrease residues as measured by the cost function. The parameters may include weights W of a neural network model M.

The training method then returns in an outer loop to step S910 where the next pair of training data is fed in. In step S920, the parameters of the model are adapted so that the aggregated residues of all pairs considered are decreased, in particular minimized. The cost function quantifies the aggregated residues. Forward- backward propagation or similar gradient-based techniques may be used in the inner loop.

More generally, the parameters of the model NN are adjusted to improve objective function F which is either a cost function or a utility function, such as (1) or (2) above. In embodiments, the cost function is configured to the measure the aggregated residues. In embodiments the aggregation of residues is implemented by summation over all or some residues for all pairs considered. The method may be implemented on one or more general-purpose processing units TS, preferably having processors capable for parallel processing to speed up the training. A min-max optimization may be done as per eq (2), and the parameters of the generator G and discriminator D are minimized and maximized in turns, keeping the parameters $\theta_G$ or $\theta_D$ of the other model M constant.

The components of the training system TS may be implemented as one or more software modules, run on one or more general-purpose processing units PU.

Whilst the above training has been described with reference to labelled data in a supervised setup, such labelling may not necessarily be required. Unsupervised schemes, or at least partly unsupervised schemes are also envisaged herein.

Fig. 10 is an illustration of the method of Fig. 8 of obtaining training data based on a historic WB PET scan and training the model. In order to calculate a first extension $\tilde{I}_{X_1}$, the input would be the transmission image for the transmission image field of view T-FOV and the emission image for the emission field of E-FOV, each preferably indexed by their respective locations on axis Z. The calculated extension $\tilde{I}_{X_1}$ can be compared to the second emission field of view 2. E-FOV.

In order to calculate the second extension $\tilde{I}_{X_2}$, the input would be the transmission image for the transmission image field of view T-FOV and the 2. E-FOV, each preferably indexed by their respective locations on axis Z. The calculated extension $\tilde{I}_{X_2}$ can be compared to the 1. E-FOV and the 3. E-FOV.

In order to calculate the third extension $\tilde{I}_{X_3}$, the input would be the transmission image for the transmission image field of view T-FOV and the 3. E-FOV, each preferably indexed by their respective locations on axis Z. The calculated extension in cranial direction can be compared to the 2. E-FOV, while the caudal extension is preferably not compared to another E-FOV.

All emission field of view E-FOVs might be shifted along longitudinal imaging Z by (for example) half the thickness of the axial emission field of views E-FOV, and the training process might be repeated using these new "artificially created" E-FOVs. By scrolling though the historic scan in this manner, training data can be collated and the model trained.

Preferably, when training with images that do not represent the total body of the patient (and most scans do not), one may use semi-supervised learning methods. When training with total body images, one may use supervised learning, as the algorithm can be trained on each body portion. As said, Fig. 10 is merely an illustration of an example protocol and other protocols are also envisaged.

The components of the image processor IPS may be implemented as one or more software modules, run on one or more general-purpose processing units PU such as a workstation associated with the imaging arrangement IAR, or on a server computer associated with a group of imagers.

Alternatively, some or all components of the image processor IPS may be arranged in hardware such as a suitably programmed microcontroller or microprocessor, such an FPGA (field-programmable-gate-array) or as a hardwired IC chip, an application specific integrated circuitry (ASIC), integrated into the imaging arrangement IAR. In a further embodiment still, the image processor IPS may be implemented in both, partly in software and partly in hardware.

The different components of the image processor IPS may be implemented on a single data processing unit PU. Alternatively, some or more components are implemented on different processing units PU, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A system (IPS) for image processing, comprising:

   - an input interface (IN) for receiving a first input emission image ($I_E$) of a patient, obtained by an emission imaging apparatus (IA1) for a first axial field of view (*E-FOV*) along a longitudinal axis of the first imaging apparatus (IA1); and
   - a trained machine learning model (M,M1) configured to estimate, based on at least the input image, a first extension ($I_{X,E}$) of the first emission image for a second axial field of view (OF) along the longitudinal axis at least partly outside the first axial field of view.

2. System of claim 1, wherein the trained machine learning model (M,M1), or a different machine learning model (M2), is to estimate a second extension (*$I_{X,T}$*) of a second input non-emission image (*$I_T$*) for a third axial field of (OF') along the, or a, longitudinal axis of a second non-emission imaging apparatus (IA2), based on at least the second input non-emission image obtained by the second imaging apparatus (IA2) for a fourth axial field of view (T-FOV) of the, or a different, longitudinal axis of the second imaging apparatus (IA2), the third axial field of view (OF') at least partly outside the fourth axial field of view (T-FOV).

3. System of claim 1 or 2, comprising a scatter corrector (SC) configured to scatter correct the first input emission image based at least on the first and/or second image extension ($I_{X,IA1}$ $I_{X,IA2}$).

4. System of any one of the previous claims, wherein the trained machine learning model (M) is configured to estimate the first extension ($I_{X,E}$) further based on one or more of i) the, or a, second input non-emission image (*$I_T$*), and ii) contextual data in relation to the patient.

5. System of any one of the previous claims, wherein the second imaging apparatus is any one of a computed tomography [CT] imaging apparatus and a magnetic resonance [MR] imaging apparatus.

6. System of any one of the previous claims, wherein the machine learning model (M) is of the artificial neural network type.

7. System of claim 5, wherein the artificial neural network model (M) is of the recurrent type.

8. System of claim 6 or 7, wherein the artificial neural network model (M) is of the convolutional type.

9. A training system (TS) for training, based on training data, a machine learning model (M) for a task of estimating, based on at least one input image for a first axial field of view (T-FOV, E-FOV), an extension image for a second axial field (OF, OF') of view at least partly outside the first axial field of view.

10. System of claim 9, wherein the training system (TS) includes two machine learning models, a generator (G) and a discriminator (D), wherein the generator (G) generates training output data, and the other model, the discriminator (D), classifies the said training output data to produce a classification result, and wherein a parameter adjuster (TC) of the training system (TS) is to adjust, based on the training output data and the classification result, parameter(s) of at least the generator (G).

11. A method for image processing, comprising:

    - receiving (S410) a first input emission image (IE) of a patient, obtained by an emission imaging apparatus (IA1) for a first axial field of view (E-FOV) along a longitudinal axis of the first imaging apparatus (IA1); and
    - by a trained machine learning model (M,M1), estimating (S420), based on at least the input image, a first extension ($I_{X,E}$) of the first emission image for a second axial field of view (OF) along the longitudinal axis at least partly outside the first axial field of view.

12. A method of training a machine learning model (M) as used in any one of the previous claims.

**13.** A method of obtaining training data for training a machine learning model (M) for a task of estimating, based on at least one input image for a first axial field of view, an extension image for a second axial field of view at least partly outside the first field of view, comprising:

- in historical image data, identifying (S810) image portions for different axial field of views, and
- associating (S820) respective one or more portions of said portions to obtain different training data items.

**14.** A computer program element, which, when being executed by at least one processing unit, is adapted to cause the processing unit to perform the method as per any one of claims 11-13.

**15.** At least one computer readable medium having stored thereon the program element as per claim 14, or having stored thereon, the machine learning model (M) any per any one of the previous claims.

**FIG. 1**

**FIG. 2**

**Fig. 3**

$I_E$

$I_T$

S410

S420

S430

S440

$T_E^I$

**FIG. 4**

DT

CXD

C

IL  L1  LN  OL  M

IT  IE  P  CV + ReLU  P  CV + ReLU  ...  P  CV + ReLU  IX

MEM

**FIG. 5A**

IE  M1  IX,E

IT  M2  IX,T

**FIG. 5B**

FIG. 6

**FIG. 7**

FIG. 8

FIG. 9

FIG. 10

Europäisches
Patentamt

European
Patent Office

Office européen
des brevets

# EUROPEAN SEARCH REPORT

Application Number

EP 20 19 3035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/170605 A1 (QI WENYUAN [US] ET AL) 4 June 2020 (2020-06-04) | 1-9, 11-15 | INV. G06T11/00 |
| Y | * paragraphs [0041], [0047] * <br> * figures 1, 3, 5, 7c * | 10 | |
| Y,D | IAN J. GOODFELLOW: "Generative Adversarial Nets", ARXIV PREPRINT 1406.2661V1, 10 June 2014 (2014-06-10), XP002789936, * the whole document * | 10 | |

TECHNICAL FIELDS
SEARCHED     (IPC)

G06T

The present search report has been drawn up for all claims

| Place of search | Date of completion of the search | Examiner |
|---|---|---|
| Munich | 1 February 2021 | Werling, Alexander |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 19 3035

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2021

| Patent document cited in search report | | Publication date | Patent family member(s) | | Publication date |
|---|---|---|---|---|---|
| US 2020170605 | A1 | 04-06-2020 | JP 2020091277 | A | 11-06-2020 |
| | | | US 2020170605 | A1 | 04-06-2020 |

EPO FORM P0459

For more details about this annex : see Official Journal of the European Patent Office, No. 12/82

## REFERENCES CITED IN THE DESCRIPTION

**Non-patent literature cited in the description**

- **T. M. MITCHELL.** Machine Learning. McGraw-Hill, 1997, 2
- A Single Scatter Simulation Technique for Scatter Correction in 3D PET. **WATSON et al.** Three-Dimensional Image Reconstruction in Radiology and Nuclear Medicine. Springer, 1996, vol. 4, 255-268
- **IAN GOODFELLOW et al.** *Generative Adversarial Nets,* 10 June 2014